# EUROPEAN PATENT APPLICATION

(11) **EP 4 704 299 A1**
(43) Date of publication of application: **04.03.2026**
(21) Application number: 24197727.1
(22) Date of filing: 30.08.2024
(51) Int. Cl.: H02J 7/35, H02S 10/40, H02S 40/38

(54) **SOLAR CHARGE CONTROLLER**

(71) Applicant: Green Energy Group ApS, 4000 Roskilde (DK)
(72) Inventor: Lauritzen, Martin, 0154 Oslo (NO)

(57) **Abstract**

A solar charge controller for at least one solar panel array and at least one battery, the solar charge controller being adapted to be electrically connected with the at least one solar panel array and the at least one battery, the solar charge controller includes a built-in modem configured for two-way communication between the solar charge controller and a user, the built-in modem includes a soft SIM. A system including a plurality of solar charge controllers. A method of two-way communication between a solar charge controller and a user.

## Description

### INTRODUCTION

The present invention concerns a solar charge controller, a system, and a method for two-way communication between a solar charge controller and a user. The invention may be used in combination with solar panel arrays mounted on vehicles, marine vessels, buildings, or on a construction assembly as part of a solar panel farm.

### BACKGROUND

Solar charge controllers regulate the flow of energy from the solar panels to the battery bank in a solar panel array system. The primary function of a solar charge controller is to prevent overcharging or undercharging of the battery, which can significantly reduce the lifespan of the battery and impact the overall performance of the system. The controller achieves this by monitoring the voltage and current of the solar panel and battery and adjusting the charging process accordingly. Solar charge controllers play a crucial role in ensuring the optimal performance and longevity of solar power systems.

Solar charge controllers are devices that use electronic components to regulate the charge of the battery. Modern solar charge controllers are equipped with features such as maximum power point tracking (MPPT) and programmable charge algorithms, which allow for optimal charging of the battery and improved performance in varying weather conditions.

An alternator is a component in a vehicle's electrical system that is responsible for generating electricity and charging the battery while the engine is running. The alternator works by converting mechanical energy from the engine's rotating crankshaft into electrical energy. This is achieved by using a series of stationary and rotating magnets and coils of wire to produce an alternating current (AC) electrical output. This output is then converted to a direct current (DC) by the alternator's internal rectifier, which is used to charge the battery and power the vehicle's electrical system. The alternator also regulates the electrical output to ensure that the battery is not overcharged or undercharged. Overcharging can damage the battery, while undercharging can cause the battery to lose its charge and not function properly. The alternator's voltage regulator helps to maintain the correct level of electrical output to keep the battery charged and the electrical system functioning properly.

Electrical appliances may be powered from vehicles, meaning that the required energy is drawn from the battery of the vehicle. The battery is charged through the alternator and by extension through the engine, which may run on fossil fuels. Consequently, the use of appliances powered by a vehicle, has a specific carbon footprint. When the vehicle is in idle mode, the fossil fuel demands rise significantly, making the use of electricity very costly, and environmentally unfriendly.

The upcoming legislation regarding compulsory CO₂ emissions accounting for companies is a significant step towards reducing greenhouse gas emissions and mitigating the impacts of climate change. Many countries and regions are implementing regulations that require companies to report their carbon footprint and take action to reduce it.

Solar irradiation refers to the amount of solar energy that reaches the Earth's surface, and it is influenced by various meteorological factors such as cloud cover, temperature, and humidity. A typical way to measure solar irradiation is by using a device called pyranometer. Due to its cost, National Agencies across the globe only possess a small amount of them, meaning that they are placed sporadically.

### SUMMARY OF THE INVENTION

The invention relates to a solar charge controller for at least one solar panel array and at least one battery, the solar charge controller being adapted to be electrically connected between the at least one solar panel array and the at least one battery, the solar charge controller comprising a built-in modem configured for two-way communication between the solar charge controller and a user, the built-in modem comprising a soft SIM.

The solar charge controller may further comprise at least one of a Bluetooth module, a load relay, a GPS antenna, or a vibration sensor for monitoring time. The solar charge controller may be mounted on an object, the object being at least one of a vehicle, a marine vessel, a building, or an assembly, the assembly being a part of a solar panel farm.

The invention further relates to a system, the system comprising a plurality of solar charge controllers, the system being arranged to transmit or receive meteorological data through a cloud storage between one or more users and the plurality of solar charge controllers regarding a solar irradiance across a plurality of locations.

The invention relates also to a method of two-way communication between a solar charge controller and a user. The method may comprise receiving or transmitting data through a cloud storage. The method may further comprise using the received or transmitted data to optimize the charging of the at least one battery. The data may comprise at least one of meteorological data, voltage and current for the at least one solar panel array, voltage and current for the at least one battery, GPS data (latitude, longitude, altitude), temperature of solar charge controller, State of Charge (SOC) of the at least one battery, total energy produced in kWh, error warnings, charging status. The method may further be comprising remotely controlling a device connected to the solar charge controller through a Bluetooth module or a load relay. The method may further comprise measuring time using a vibration sensor. The method may further comprise calculating CO₂ savings.

The invention further relates to the use of the solar charge controller as a meteorological sensor, CO₂ savings counter, power management system, solar energy power system, in solar energy farming.

The invention may be used to deliver solar irradiation meteorological data for the determination and forecast of adverse weather events. The invention may also receive data on solar irradiation for determining the performance of photovoltaic systems, helping the systems predict changes in power output and efficiency due to adverse weather conditions such as storms, hurricanes, or extreme temperatures. Additionally, solar irradiation data can be used to improve weather forecasting models, ultimately leading to more accurate predictions of adverse weather events and better preparedness for their impacts.

The invention may further be used to make current and voltage adjustments depending on the characteristics of the connected device over a cloud storage, without the need of a technician making adjustments on-site.

### BRIEF DESCRIPTION OF DRAWINGS

Example embodiments of the invention will now be described with reference to the following drawings, where:
Figure 1 shows an exemplary schematic of the solar charge controller.
Figures 2-3 show exemplary schematics of the solar charge controller with additional features.
Figure 4 shows an exemplary solar charge controller mounted on an object.
Figure 5 shows an example of a user accessing a plurality of solar charge controllers via a fleet management portal.
Figure 6 shows an example of multiple users, each with a fleet management portal accessing their plurality of solar charge controllers through a cloud storage.
Figure 7 shows an exemplary external view of the solar charge controller.

### DETAILED DESCRIPTION

Example embodiments are described with reference to the drawings. The examples are illustrations only and are not limiting for the invention.

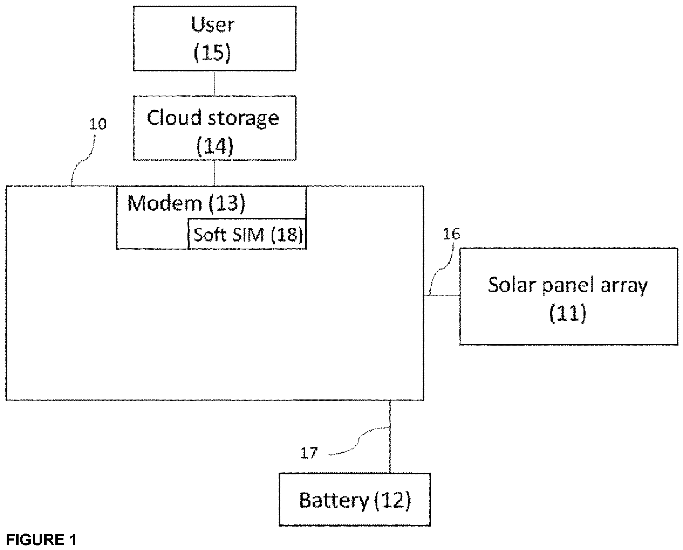

Figure 1 shows a schematic of a solar charge controller 10 for at least one solar panel array 11 and at least one battery 12. The solar charge controller 10 is adapted to be electrically connected with the at least one solar panel array 11 and the at least one battery 12. The solar charge controller 10 comprises a built-in modem configured for two-way communication between the solar charge controller and a user 15 through a cloud storage system 14. The solar charge controller 10 further comprises an embedded soft SIM 18. The soft SIM 18 is configured to provide the necessary credentials and authorization for the modem to access the mobile network and transmit or receive data. The modem is responsible for establishing and maintaining the connection between the solar charge controller and the mobile network. It modulates and demodulates signals, allowing the device to transmit and receive data. These data may be meteorological data, voltage and current for the at least one solar panel array, voltage and current for the at least one battery, GPS data (latitude, longitude, altitude), temperature of solar charge controller, State of Charge (SOC) of the at least one battery, total energy produced in kWh, error warnings, charging status. In this way, the soft SIM 18 gives the possibility for authorized exchange of information from solar charge controllers between a user or users of solar charge controllers. The soft SIM 18 may be programmed with a user's mobile network information remotely.

As shown in Figure 1, the solar panel array 11 is electrically connected with an electrical connection 16 to the solar charge controller. The battery is electrically connected through an electrical connection 17 to the solar charge controller.

The at least one battery 12 may be a battery of a vehicle, a battery of a marine vessel, or a separate independent battery. A plurality of other devices that are typically connected to the battery may be further electrically coupled to the battery in connection with the solar charge controller 10. Examples of such devices, but not limited to, are an inverter and an alternator.

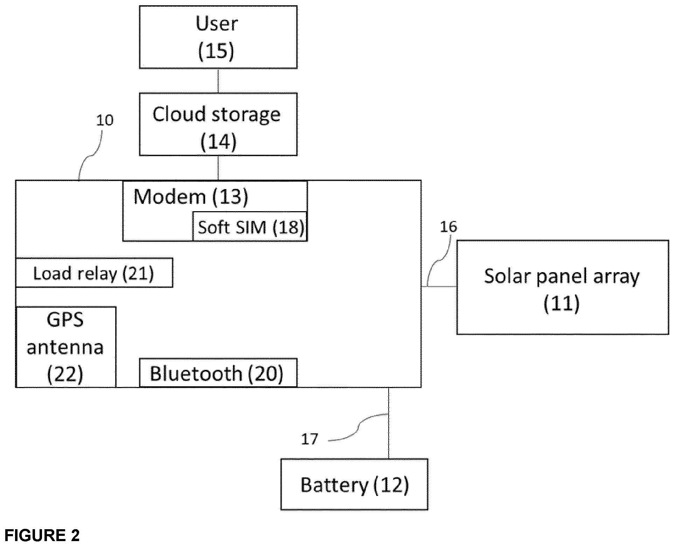

The solar charge controller 10 may further be comprising a Bluetooth module 20 as shown in Figure 2. The Bluetooth module 20 allows the connection of Bluetooth devices with the solar charge controller 10. Such devices may be the battery 12, an inverter, a temperature sensor, or other devices supporting Bluetooth.

With the Bluetooth module 20, it is possible to connect and control devices which are normally electrically connected to the solar charge controller 10 avoiding additional cable connections. As an example, the solar charge controller 10, mounted on a vehicle may be connected with a device, the device being an inverter, which may be placed anywhere in the vehicle. The inverter may be connected to the solar charge controller 10 via Bluetooth, avoiding drawing cables from the inverter to the solar charge controller. The inverter may still be powered from the battery 12 but the communication may be achieved through Bluetooth.

The solar charge controller 10 may further be comprising a load relay 21 as shown in Figure 2. The load relay 21, may be used to electrically connect electric devices such as lamps, space heaters, submersible pumps, coffee machines or other devices.

The solar charge controller 10 may further be comprising a GPS antenna 22 as shown in Figure 2.

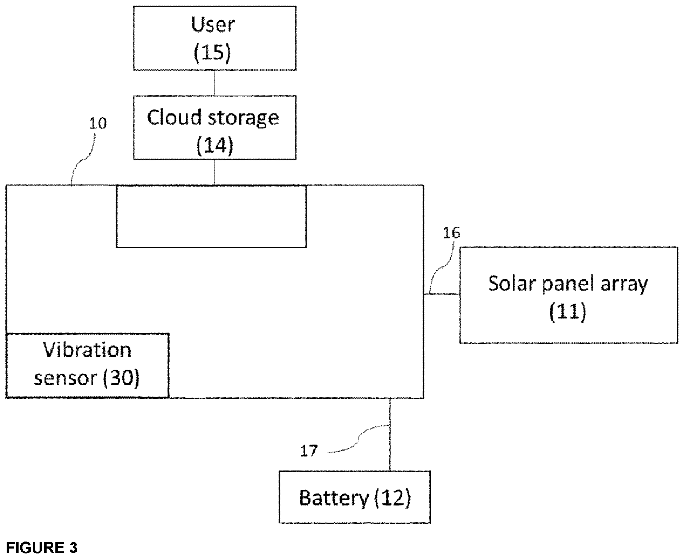

The solar charge controller 10 may further comprise a vibration sensor 30 for monitoring time, as shown in Figure 3.

The solar charge controller 10 may be part of an off-grid solar panel array system. The solar charge controller may be mounted on an object, the object being at least one of a vehicle, a marine vessel, a building, or an assembly, the assembly being part of a solar panel farm. The object may therefore have a dynamic or fixed location. By extension, since the solar charge controller is mounted on the object, the transmitted or received data related to the solar charge controller can therefore transmit or receive information regarding a specific location. This information may be for example meteorological information, by transmitting or receiving solar irradiance data. The information may also be voltage and/or current data to make voltage and/or current adjustments depending on the characteristics of the connected device.

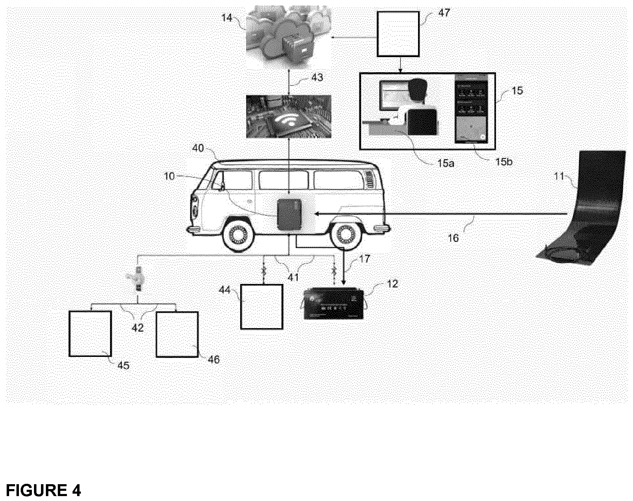

In Figure 4, the object 40 is a vehicle. The electrical connection 16 to the solar panel 11 and the electrical connection 17 to the battery 12 are represented with the respective arrows. The battery 12 may be the battery of the vehicle, or a separate independent battery. Bluetooth connections 41 represent the Bluetooth connection of the Bluetooth module 20 with one or more Bluetooth-supporting devices 44 and/or the battery 12, and load relay connections 42 represent the electrical connection of the load relay 21 with one or more electrical devices 45, 46. The internet connection 43 to the cloud storage 14 is achieved via the modem 13. A fleet management portal 47 allows a user 15 to access their data in the cloud storage 14. A user 15 may access the fleet management portal 47 via a computer 15a or an app 15b on a mobile phone or tablet.

An internet connection 43 represents the connection of the modem 13 of the solar charge controller 10 to a cloud storage 14. Through the cloud storage 14, a user 15 can access data regarding devices connected to the solar charge controller 10, for example regarding the solar panel array 11 or the battery 12.

The solar charge controller 10 provides a method of two-way communication between a solar charge controller 10 and a user 15. The two-way communication may comprise receiving or transmitting data through a cloud storage 14. Since the solar charge controller 10 can communicate with devices which are connected to it, by extension the user 15 may have a two-way communication with the devices connected to the solar charge controller 10.

The method of two-way communication may further comprise using the received or transmitted data to optimize the charging of the at least one battery 12. The charging of the battery 12 may be optimized using different algorithms, which the solar charge controller 10 may be equipped with. An example of such algorithm is a MPPT algorithm, which tracks the solar panel array's 11 maximum power point in order to charge the battery 12 with maximum energy.

The method of two-way communication transmitting data, wherein data may comprise at least one of meteorological data, voltage and current for the at least one solar panel array, voltage and current for the at least one battery, GPS data (latitude, longitude, altitude), temperature of solar charge controller, State of Charge (SOC) of the at least one battery, total energy produced in kWh, error warnings, charging status. In this way, solar irradiation meteorological data may be exchanged for the determination and forecast of adverse weather events. The reception of data regarding solar irradiation may improve the performance of photovoltaic systems, helping the systems predict changes in power output and efficiency due to adverse weather conditions such as storms, hurricanes, or extreme temperatures. Additionally, the exchange of solar irradiation data can be used to improve weather forecasting models, ultimately leading to more accurate predictions of adverse weather events and better preparedness for their impacts.

A user 15 can update the solar charge controller 10 through the cloud storage 14. This means that firmware and software updates may be done remotely through the cloud storage 14 without one needing to be within an access range, for example Bluetooth range, of the solar charge controller 10.

The method of two-way communication may further comprise measuring time using the vibration sensor 30. This allows for a time period to be measured. An example of a time period may be the idle time of a vehicle. A time period may also be used to calculate characteristics of the solar panel array system.

The method of two-way communication may further comprise calculating CO₂ savings. A magnitude of CO₂ savings may be provided by the total energy produced in kWh from an at least one solar panel array 11. This is a useful feature for companies or individuals who want to count their CO₂ emissions.

In an instance where a device like an alternator or an inverter is electrically connected to a car battery 12, the solar charge controller 10 that is connected to the same car battery 12 may need current and voltage adjustments depending on the characteristics of the connected device. All these adjustments may be achieved over the air, without the need of a technician making the adjustments on-site.

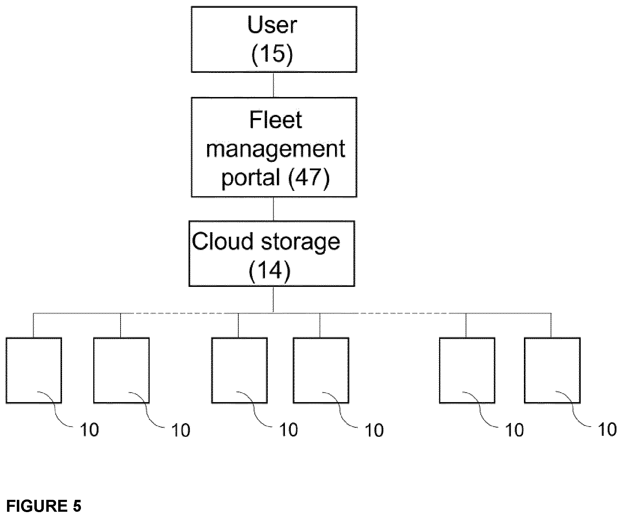

Figure 5 shows an exemplary system comprising a plurality of solar charge controllers. The system is arranged to provide meteorological data from the plurality of solar charge controllers regarding a solar irradiance across a plurality of locations. A user 15 may have access to a plurality of solar charge controllers 10 as shown in Figure 5. A fleet management portal 47 may give partial or complete access through the cloud storage 14 to the collected data. The fleet management portal 47 may allow for example a user 15 to access through the cloud storage 14 only part of the collected data. This is to prevent users of the cloud storage 14 from accessing data that they are not supposed to have access to. A user 15 who is an authorized central user may still have complete access to all the data in the cloud storage 14.

The user 15 may be a customer, such as a user of a vehicle, a vehicle fleet owner, a user of a marine vessel, a marine fleet owner, a user of one or more buildings, an owner of one or more buildings, an owner or user of a solar energy farm, or a user and/or owner of a combination of the above, upon which the solar charge controller 10 or a plurality of solar charge controllers are mounted on.

The multiple solar charge controllers 10 could provide data from multiple solar panel arrays 11 which may be scattered across a plurality of locations. The data may be meteorological data, regarding the solar irradiance across different locations. This may allow the plurality of charge controllers 10 to act as meteorological sensors.

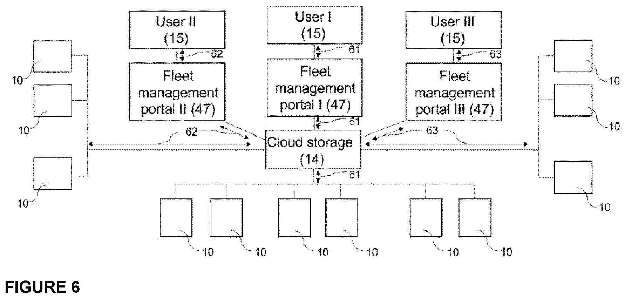

A plurality of users 15 may be connected to the cloud storage 14, each user 15 having their own fleet management portal 47 corresponding to their plurality of solar charge controllers 10. An authorized central user may still have access to all the data in the cloud storage 14. An example with three users and three fleet management portals, user I 15 with fleet management portal I 47, user II 15 with fleet management portal II 47, and user III 15 with fleet management portal III 47, is shown in Figure 6. The access I 61 represent the communication line between the user I 15 with their plurality of solar charge controllers 10. The access II 62 represent the communication line between the user II 15 with their plurality of solar charge controllers 10. The access III 63 represent the communication line between the user III 15 with their plurality of solar charge controllers 10.

The method of two-way communication may further comprise remotely controlling a device connected to the solar charge controller through a Bluetooth module. The method of two-way communication may further comprise remotely controlling a device connected to the solar charge controller through a load relay.

Because of the two-way communication between the solar charge controller 10 and the user 15 through the cloud storage 14, it is possible to remotely operate one or more Bluetooth-supporting devices 44 and/or the battery 12 that are connected through the Bluetooth module 20 or to switch on and off one or more electrical devices 45, 46 that are connected to the load relay 21. This is a feature making the solar charge controller 10 a communication device. Solutions in the current state of the art require the separate purchase of a communication device for achieving the same level of functionality.

The solar charge controller 10 acting as a communication device may be useful, for example, when a solar charge controller 10 is installed on a marine vessel and a leak is detected through a water leak detection Bluetooth-supporting device 44. The user 15 may be notified through the cloud and switch on an electrical device 45 through the load relay 21, the electrical device 45 being a submersible pump, which would minimize the flood in the vessel. In another example, the solar charge controller 10 is being installed in a building, a marine vessel, or a vehicle and a Bluetooth-supporting device 44 being a temperature sensor detects a drop/increase in the temperature below/over a determined threshold. The user 15 may be notified through the cloud storage 14 and can activate an electrical device 46, the electrical device 46 being a space heater/cooler to recover the temperature within the desired range. The user 15 may not need to intervene and activate the electrical devices 45, 46 since the process may be automatic or controlled via a computer program.

In another example, data are collected in the cloud storage 14 from multiple solar charge controllers 10 that are operating as part of a solar energy farm in a specific location. The data may be used to forecast the solar conditions and by extension the expected solar energy availability around that specific area. Through the cloud storage 14, an authorized user may send forecasted data to solar charge controllers 10 that are mounted on nearby objects, the objects being a vehicle, a building, a marine vessel or a solar energy farm. By having this information, a user 15 or the solar charge controller 10, manually or automatically, may manage better their energy consumption.

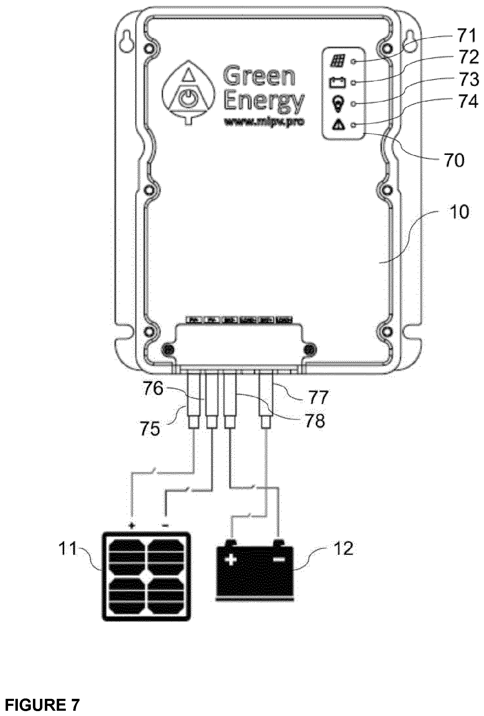

An external view of the solar charge controller 10 is shown in Figure 7. A panel indicator 70 allows for direct visual information regarding the status of the charge with the charge indicator 71, the battery status with a battery indicator 72, the status of the load with a load indicator 73, or any system alarm with the system alarm indicator 74.

As a charge controller, the solar charge controller 10 is a DC-DC converter, converting the everchanging DC power from the solar panel array 11 to controlled DC power matching the specifications of the battery 12 upon which the solar charge controller 10 is electrically connected to. The solar charge controller 10 is electrically connected to the solar panel array 11 via a solar positive port 75 and a solar negative port 76, and electrically connected to the battery 12 via a battery positive port 77 and a battery negative port 78.

The solar charge controller may be used as a meteorological sensor, as a CO₂ savings counter, as a power management system, as a solar energy power system, or in solar energy farming.

Having described example embodiments of the invention it will be apparent to those skilled in the art that other embodiments incorporating the concepts may be used. These and other non-limiting examples illustrated above are intended by way of example only and the actual scope of the invention is to be determined from the following claims.

| Number | Object |
|---|---|
| 10 | Solar charge controller |
| 11 | Solar panel array |
| 12 | Battery |
| 13 | Modem |
| 14 | Cloud storage |
| 15 | User |
| 16 | Solar panel electrical connection |
| 17 | Battery electrical connection |
| 18 | Soft SIM |
| 20 | Bluetooth |
| 21 | Load relay |
| 22 | GPS antenna |
| 30 | Vibration sensor |
| 40 | Object |
| 41 | Bluetooth connection |
| 42 | Load relay connection |
| 43 | Internet connection |
| 44 | Bluetooth-supporting device |
| 45 | Electrical device |
| 46 | Electrical device |
| 47 | Fleet management portal |
| 61 | Access I |
| 62 | Access II |
| 63 | Access III |
| 70 | Indicator panel |
| 71 | Charge indicator |
| 72 | Battery indicator |
| 73 | Load indicator |
| 74 | System alarm indicator |
| 75 | Solar panel positive port |
| 76 | Solar panel negative port |
| 77 | Battery positive port |
| 78 | Battery negative port |

## Claims

1. A solar charge controller for at least one solar panel array and at least one battery, the solar charge controller being adapted to be electrically connected with the at least one solar panel array and the at least one battery, the solar charge controller comprising a built-in modem configured for two-way communication between the solar charge controller and a user, the built-in modem comprising a soft SIM.

2. The solar charge controller according to claim 1, further comprising at least one of a Bluetooth module, a load relay, a GPS antenna, a vibration sensor for monitoring time.

3. The solar charge controller according to claim 1 or 2, wherein the solar charge controller is mounted on an object, the object being at least one of a vehicle, a marine vessel, a building, or an assembly, the assembly being a part of a solar panel farm.

4. A system, comprising:
a plurality of solar charge controllers according to anyone of claims 1-3, the system being arranged to transmit or receive meteorological data through a cloud storage between one or more users and the plurality of solar charge controllers regarding a solar irradiance across a plurality of locations.

5. A method of two-way communication between a solar charge controller according to anyone of claims 1-4 and a user.

6. The method of claim 5, wherein the two-way communication comprises receiving or transmitting data through a cloud storage.

7. The method according to claim 5 or 6, further comprising using the received or transmitted data to optimize a charging of at least one battery.

8. The method according to claim 6 or 7, wherein data comprising at least one of meteorological data, voltage and current for the at least one solar panel array, voltage and current for the at least one battery, GPS data (latitude, longitude, altitude), temperature of solar charge controller, State of Charge (SOC) of the at least one battery, total energy produced in kWh, error warnings, charging status.

9. The method according to anyone of claims 5-8, further comprising remotely controlling a device connected to the solar charge controller through a Bluetooth module.

10. The method according to anyone of claims 5-9, further comprising remotely controlling a device connected to the solar charge controller through a load relay.

11. The method according to anyone of claims 5-10, further comprising monitoring time using a vibration sensor.

12. The method according to anyone of claims 5-11, further comprising calculating CO₂ savings.

13. The use of the solar charge controller according to anyone of claims 1-4, as a meteorological sensor, CO₂ savings counter, power management system, solar energy power system, in solar energy farming.
